# EUROPÄISCHE PATENTSCHRIFT

(11) **EP 1 588 784 B1**
(45) Veröffentlichungstag und Bekanntmachung des Hinweises auf die Patenterteilung: **22.08.2007**
(21) Anmeldenummer: 05007502.7
(22) Anmeldetag: 06.04.2005
(51) Int. Cl.: B21B 37/24, B23K 26/24

(54) **Hybrid hergestelltes Blechelement und Verfahren zu seiner Herstellung**
Hybrid metal sheet and its method of manufacturing
Tôle métallique hybride et sa méthode de fabrication

(30) Priorität: 19.04.2004 DE 102004019448
(43) Veröffentlichungstag der Anmeldung: 26.10.2005
(73) Patentinhaber: Muhr und Bender KG, 57439 Attendorn (DE)
(72) Erfinder: Hauger, Andreas, Dr.-Ing., 57439 Attendorn (DE)
(74) Vertreter: Neumann, Ernst Dieter

(56) Entgegenhaltungen:
- EP-A- 0 508 102
- EP-A- 1 481 743
- DE-B3- 10 350 670
- KOPP R ET AL: "BELASTUNGSANGEPASSTE BLECHE DURCH FLEXIBLES WALZEN" VDI Z, VDI VERLAG, DUSSELDORF, DE, Nr. SPECIAL ISSUE, Oktober 1998 (1998-10), Seiten 50-53, XP000827017 ISSN: 0042-1766

## Beschreibung

Die Erfindung betrifft aus mehreren Teilen gefügte Blechelemente, insbesondere als Halbzeug zur nachfolgenden Verformung zum weiteren Einsatz als Profile oder Bleche in Fahrzeugkarosserien.

Es ist bereits bekannt, Bleche unterschiedlicher Dicke für den genannten Anwendungsfall in stumpfem Stoß zusammenzuschweißen, um Profile oder Platinen mit gestufter Festigkeit daraus herzustellen. Derartige abgestufte Festigkeiten sind häufig im Hinblick auf das Crashverhalten besonderer Fahrzeugkarosserieteile erwünscht.

Aus der EP 0 508 102 A1 ist ein Verfahren zum Nahtschweißen von ungleich dicken Blechzuschnitten bekannt, bei welchem als Vorbereitung für den Schweißvorgang mindestens der dickere der beiden Blechzuschnitte in seinem zu verschweißenden Randbereich dickenvermindernd bearbeitet wird, damit die Blechzuschnitte im genannten Randbereich zumindest annähernd die gleiche Blechdicke haben. Diese zueinander gleiche Blechdicke erstreckt sich über die gesamte Länge der Schweißnaht.

Aus der älteren nach veröffentlichten EP 1 481 743 A2 der Anmelderin sind Blechelemente aus flexibel gewalztem Bandmaterial mit in Bandlängsrichtung unterschiedlichen Dicken bekannt, die zu einem gewellten Flächenelement umgeformt sind, wobei mehrere solcher Blechelemente entlang von Längskanten zu einem Flächenelement zusammengesetzt sind.

Der vorliegenden Erfindung liegt die Aufgabe zugrunde, mit geringem Aufwand Blechelemente bereitzustellen, die differenzierte Festigkeiten innerhalb der Blechelemente aufweisen.

Eine Lösung hierfür liegt in einem Blechelement, das gefügt ist aus zumindest einem Teil aus flexibel gewalztem Blech mit längs der Walzrichtung variabler Blechdicke und zumindest einem Teil aus gewalztem Blech mit konstanter Blechdicke, bei welchem an der Fügestelle zumindest teilweise unterschiedliche Blechdicken zusammentreffen. Eine andere Lösung liegt in einem Blechelement, das gefügt ist aus zumindest zwei Teilen aus flexibel gewalztem Blech, bei welchem an der Fügestelle zumindest teilweise unterschiedliche Blechdicken zusammentreffen. Hiermit ist es möglich, Dickenvariationen darzustellen, die durch Verschweißen von Einzelblechen nicht oder nur mit hohem Aufwand darzustellen sind und die durch flexibles Walzen alleine ebenfalls nicht oder nicht in den gewünschten Abmessungen dargestellt werden können. Hierbei ist es insbesondere vorteilhaft, große Blechbereiche gleicher Dicke aus einheitlich gewalztem üblichen Blech konstanter Blechdicke auszubilden und nur Bereiche mit starker Blechdickenvariation aus flexibel gewalztem Blech mit in Walzrichtung variabler Blechdicke darzustellen.

Nach einer ersten Alternative ist es möglich, daß die Fügestelle im wesentlichen parallel zu der genannten Walzrichtung verläuft, längs der sich die Blechdicke im flexibel gewalzten Material verändert. Es ist deutlich, daß sich ein Blechelement mit einer solchen Struktur alleine durch Schweißen von Einzelelementen nur mit erheblichem Aufwand darstellen läßt, wobei in den meisten Fällen Schweißnähte längs zweier zueinander senkrechter Achsen erforderlich wären.

Nach einer zweiten Alternative ist vorgesehen, daß die Fügestelle im wesentlichen quer zu der genannten Walzrichtung verläuft, längs der sich die Blechdicke innerhalb des flexibel gewalzten Materials verändert. Hierbei ergeben sich Fügestellen mit jeweils konstanter Blechdicke der zu fügenden Teile.

In besonderer Ausgestaltung sind an einem erfindungsgemäßen Blechelement mehrere Fügestellen vorgesehen, wobei diese bevorzugt parallel zueinander verlaufen. Hierbei kann nach einer ersten Ausführungsform vorgesehen sein, daß ein Teil aus flexibel gewalztem Blech zwischen zwei Teilen aus Blech mit konstanter Dicke liegt. In Umkehrung hierzu ist es auch möglich, daß ein Teil aus Blech mit konstanter Dikke zwischen zwei Teilen aus flexibel gewalztem Blech liegt. Vorzugsweise kann hierbei eine Blechdickensymmetrie längs einer Mittelachse dargestellt werden.

Das Fügen kann vorzugsweise durch Schweißen erfolgen, wobei die Fügestellen in stumpfem Stoß oder überlappend angelegt sein können. Hierbei können die bekannten Schweißverfahren wie Laserschweißen, Magnetarcschweißen usw. verwendet werden. Nach Alternativen ist es jedoch auch möglich, daß die einzelnen Teile einander überlappend geclincht oder genietet werden, oder daß die einzelnen Teile einander überlappend miteinander verklebt werden. Schließlich ist es möglich, die einzelnen Teile durch eine Quetschnaht miteinander zu verbinden.

Nachfolgend werden besonders günstige Verfahren zur Herstellung von Blechelementen gemäß der Erfindung angeführt.

Ein erstes Verfahren zur Herstellung von erfindungsgemäßen Blechelementen ist dadurch gekennzeichnet, daß zumindest ein Band aus flexibel gewalztem Blech mit längs der Walzrichtung variabler Blechdicke und ein Band aus gewalztem Blech mit konstanter Blechdicke parallel zu der genannten Walzrichtung endlos zu einem Band gefügt werden und anschließend Blechelemente aus mindestens einem Teil aus flexibel gewalztem Band und zumindest einem Teil aus Blech mit konstanter Blechdicke abgetrennt werden, wobei die Bänder so gefügt werden, daß an der Fügestelle unterschiedliche Blechdicken aufeinandertreffen. Ein alternatives Verfahren zur Herstellung von erfindungsgemäßen Blechelementen ist dadurch gekennzeichnet, daß zumindest zwei Bänder aus flexibel gewalztem Blech mit längs der Walzrichtung A₁, A₂ variabler Blechdicke parallel zu der genannten Walzrichtung endlos zu einem Band gefügt werden und anschließend Blechelemente aus zumindest zwei verschiedenen Teilen vom Band abgetrennt werden, wobei die Bänder so gefügt werden, daß an der Fügestelle unterschiedliche Blechdicken aufeinandertreffen. Hierbei werden zwei Bandrollen (Coils) aus flexibel gewalztem Band und aus Band mit konstanter Blechdicke bzw. zwei Bandrollen aus jeweils flexibel gewalztem Band mit voneinander abweichender Dickenfolge synchron abgewickelt und so zusammengeführt, daß sie längs ihrer Längskanten miteinander gefügt werden können. Dieser Vorgang kann auch mehrfach wiederholt werden. Erst danach werden einzelne Teile von diesem Band abgetrennt. Die einzelnen Teile haben hierbei Blechdickenstrukturen, die auf andere Weise kaum darstellbar sind, beispielsweise können umlaufende Randbereiche größere Dicke mit innenliegenden Feldern geringerer Blechdicke kombiniert werden. Hierbei kann das gefügte Band zunächst wieder aufgewickelt und weiteren Behandlungsschritten zur Wärmebehandlung und Oberflächenbehandlung unterzogen werden, erst danach müssen die einzelnen Blechelemente abgetrennt werden.

Ein drittes Verfahren ist dadurch gekennzeichnet, daß abwechselnd Teile aus flexibel gewalztem Blech mit längs der Walzrichtung variabler Blechdicke und aus gewalztem Blech mit konstanter Blechdicke jeweils quer zu der genannten Walzrichtung endlos zu einem Band aneinandergefügt werden und anschließend Blechelemente mit jeweils zumindest einem Teil aus flexibel gewalztem Blech und zumindest einem Teil aus Blech mit konstanter Blechdicke abgetrennt werden, wobei die Bänder so gefügt werden, daß an der Fügestelle unterschiedliche Blechdicken aufeinandertreffen. Das hierdurch zunächst gebildete Band hat ausschließlich Dickensprünge quer zur Bandlängsrichtung und ähnelt insoweit einem flexibel gewalztem Band. Es sind jedoch durch das Fügen größere Spreizungen der Blechdicke möglich, als durch das flexible Walzen alleine darstellbar sind. Dies bedeutet, daß zunächst von flexibel gewalzten Bändern und/oder mit konstanter Blechdicke gewalzten Bändern einzelne Teile abgetrennt werden, die dann in abwechselnder Folge zu einem Band aneinandergesetzt werden, an dem weitere Bearbeitungsschritte ausgeführt werden, die sich in günstiger Weise an Bandrollen (Coils) ausführen lassen. Dies sind insbesondere Schritte der Wärmebehandlung und der Oberflächenbehandlung. Erst nach diesen Behandlungsschritten wird dann das Band so geteilt, daß jeweils einzelne aus zumindest zwei unterschiedlich gewalzten Teilen gefügte Blechelemente entstehen.

Bevorzugte Beispiele der Erfindung sind in den Zeichnungen dargestellt.
- Figur 1: zeigt ein aus zwei Teilen gefügtes Blechelement, von denen eines aus flexibel gewalztem Blech besteht
a) in Draufsicht
b) im Schnitt gemäß Darstellung a);
- Figur 2: zeigt ein aus drei Teilen gefügtes Blechelement, von denen das mittlere aus flexibel gewalztem Blech besteht
a) in Draufsicht
b) im Schnitt gemäß Darstellung a);
- Figur 3: zeigt ein aus drei Teilen gefügtes Blechelement, von denen die äußeren aus flexibel gewalztem Blech bestehen
a) in Draufsicht
b) im Schnitt gemäß Darstellung a);
- Figur 4: zeigt ein aus zwei Teilen gefügtes Blechelement, die beide aus flexibel gewalztem Blech bestehen
a) in Draufsicht
b) im Schnitt gemäß Darstellung a);
- Figur 5: zeigt ein aus zwei Teilen gefügtes Blechelement, von denen eines aus flexibel gewalztem Blech besteht, mit quer zur Walzrichtung liegender Fügestelle
a) in Draufsicht
b) im Schnitt gemäß Darstellung a);
- Figur 6: zeigt ein aus drei Teilen gefügtes Blechelement, von denen die äußeren aus flexibel gewalztem Blech bestehen mit quer zur Walzrichtung verlaufenden Fügestellen
a) in Draufsicht
b) im Schnitt gemäß Darstellung a);
- Figur 7: zeigt ein aus drei Teilen gefügtes Blechelement, von denen das mittlere aus flexibel gewalztem Blech besteht, mit quer zur Walzrichtung verlaufenden Fügestellen.

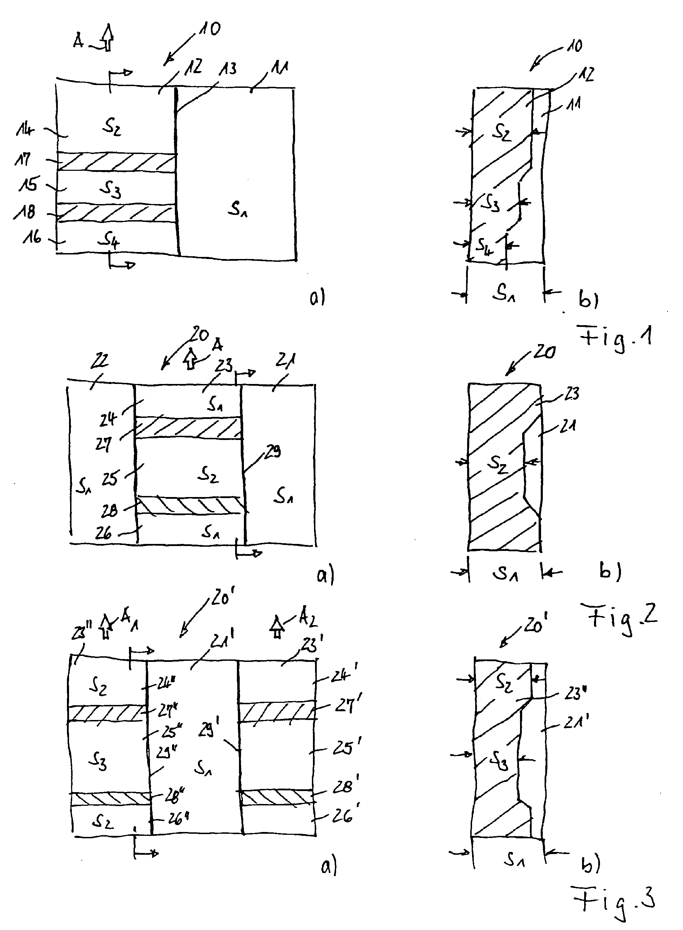

In Figur 1 ist ein erfindungsgemäßes Blechelement 10 gezeigt, das aus einem Blech 11 konstanter Dicke S₁ und einem flexibel gewalzten Blech 12 gefügt ist. Als Fügestelle ist eine Schweißnaht 13 gezeigt. Das flexibel gewalzte Blech 12 hat in Walzrichtung A hintereinanderliegend drei Bereiche 14, 15, 16 mit abnehmender Dicke S₂, S₃, S₄, wobei Übergangsbereiche 17, 18 in Draufsicht schraffiert gezeichnet sind.

In Figur 2 ist ein erfindungsgemäßes Blechelement 20 gezeigt, das aus zwei außenliegenden Teilen 21, 22 konstanter Dicke S₁ und einem flexibel gewalzten Teil 23 mit drei Abschnitten 24, 25, 26 mit unterschiedlichen Dicken S₁, S₂ besteht. Die Dicken ändern sich in Walzrichtung A. Übergangsbereiche 27, 28 sind in Draufsicht schraffiert dargestellt. Fügestellen sind als Schweißnähte 29 ausgebildet. Es ist hiermit ein im wesentlichen napfförmiges Teil mit reduzierter zentraler Dicke S₂ gebildet, wobei der Abschnitt 25 im Verhältnis zu den umlaufenden Randabschnitten 21, 22, 23, 26 größer sein kann als hier dargestellt.

In Figur 3 ist ein erfindungsgemäßes Blechelement 20' gezeigt, das aus einem mittleren Abschnitt 21' konstanter Dicke S₁ sowie zwei äußeren Teilen 23', 23" aus flexibel gewalztem Blech mit den Walzrichtungen A₁, A₂ gefügt ist. Die äußeren Teile haben jeweils drei Abschnitte 24', 25', 26', 24", 25", 26" unterschiedlicher Dicke S₂, S₃, wobei Übergangsbereiche 27', 28', 27", 28" in Draufsicht schraffiert gezeichnet sind. Fügestellen sind als Schweißnähte 29', 29" ausgeführt.

In Figur 4 ist ein erfindungsgemäßes Blechelement 30 dargestellt, das aus zwei Teilen 31, 32 aus flexibel gewalztem Blech gefügt ist, wobei die Teile jeweils Abschnitte 34, 35, 36, 37 unterschiedlicher Dicke S₁, S₂ aufweisen. Übergangsbereiche 38, 39 sind in Draufsicht schraffiert dargestellt. Die parallel zu den Walzrichtungen A₁, A₂ verlaufende Fügestelle ist als Schweißnaht 33 ausgebildet. Die Teile 31, 32 sind so gefügt, daß überwiegend unterschiedliche Blechdicken an der Schweißnaht aneinanderstoßen.

Bei allen Ausführungsbeispielen nach den Figuren 1 bis 4 kann zunächst ein endloses Band aus zwei gewalzten Bändern mit einer endlosen Fügestelle in Walzrichtung gefügt werden und dann einzelne Teile 10, 20, 30, gegebenenfalls unter Inkaufnahme von Verschnitt, quer zur Walzrichtung abgetrennt werden.

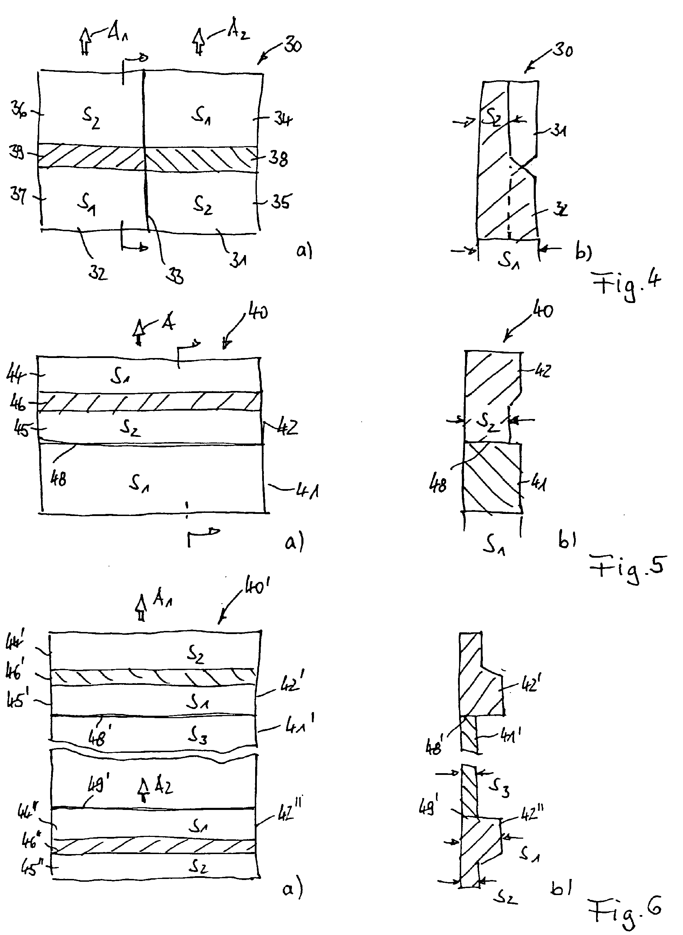

In Figur 5 ist ein erfindungsgemäßes Blechelement 40 gezeigt, das aus einem Teil 41 konstanter Blechdicke S₁ sowie aus einem flexibel gewalzten Teil 42 mit der Walzrichtung A mit Abschnitten 44, 45 unterschiedlicher Dicke S₁, S₂ zusammengefügt ist. Ein Übergangsabschnitt 46 ist in Draufsicht schraffiert dargestellt. An der als Schweißnaht 48 ausgeführten Fügestelle stoßen unterschiedliche Blechdicken zusammen, die einen Dickensprung haben, der durch flexibles Walzen alleine in der Form und/oder in der Größe nicht darstellbar wäre.

In Figur 6 ist ein erfindungsgemäßes Blechelement 40' gezeigt, das aus einem Teil 41' konstanter Dicke S₃ sowie zwei flexibel gewalzten Teilen 42', 42" gefügt ist, wobei letztere jeweils Abschnitte 44', 45', 44", 45" unterschiedlicher Dicke S₁, S₂ haben. Übergangsbereiche 46' sind in Draufsicht schraffiert dargestellt. Die Fügestellen sind als Schweißnähte 48', 49' dargestellt und verlaufen quer zur Walzrichtung A₁, A₂ der flexibel gewalzten Teile. An den Fügestellen findet sich, ähnlich wie in Figur 5, ein Dickensprung, der durch flexibles Walzen so nicht darstellbar wäre. Wie durch eine Bruchlinie verdeutlicht, kann das Teil 41' konstanter Dicke im Verhältnis zu den flexibel gewalzten Teilen von größerer Erstreckung sein.

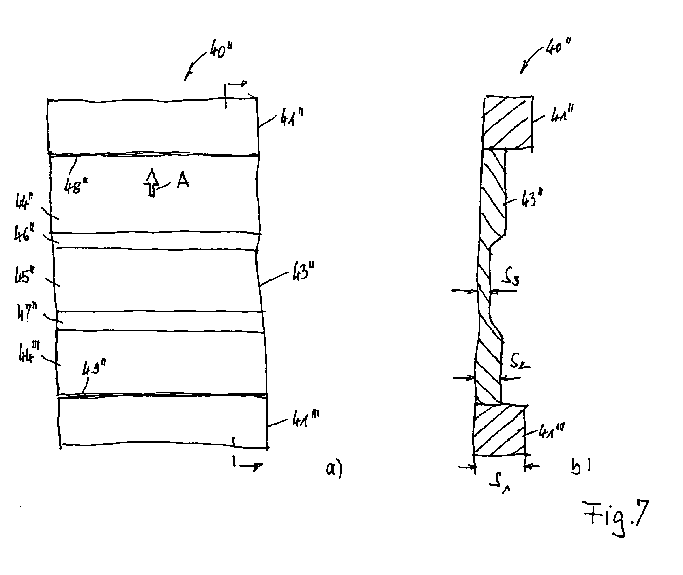

In Figur 7 ist ein erfindungsgemäßes Blechelement 40" gezeigt, das aus zwei Teilen 41 ", 41 "' konstanter Dicke S₁ sowie aus einem flexibel gewalzten Teil 43" gefügt ist, das Abschnitte 44", 45", 44"' unterschiedlicher Dicke S₁, S₂ umfaßt. Übergangsbereiche 46", 47" sind in Draufsicht schraffiert dargestellt. Die Fügestellen sind als Schweißnähte 48", 49" dargestellt und verlaufen quer zur Walzrichtung A. An den Fügestellen findet sich, ähnlich wie in Figur 6, ein Dickensprung, der durch flexibles Walzen nicht darstellbar wäre.

Die Elemente nach den Figuren 5 bis 7 sind aus einzeln vom gewalzten Blech abgetrennten Teilen zu fügen, wobei zunächst wieder ein Band erzeugt werden kann, das nach weiteren Behandlungsschritten wieder zu gefügten Blechelementen geteilt wird.

In allen dargestellten Ausführungsbeispielen nach den Figuren 1 bis 7 kann der Verlauf der Fügestellen auch schräg zu den jeweiligen Walzrichtungen verlaufen, so daß von 0° oder 90° abweichende Winkel zwischen der Walzrichtung A und den Fügestellen 13, 29, 33, 48, 49, gebildet werden.

In allen Figuren sind in den Darstellungen a) die Bleche in ihren Erstreckungen eher verkürzt dargestellt, während in den Darstellungen b) die Dicken S im Verhältnis zu der Längserstreckung jeweils stark übertrieben gezeigt sind.

Das Fügen von Blechelementen nach den Figuren 1 bis 7 schließt die Möglichkeit der Verwendung verschiedener Werkstoffe für die Teile ein.

### Bezugszeichenliste

- 10: Blechelement
- 11: Blech (konstanter Dicke)
- 13: Schweißnaht
- 14: Abschnitt
- 15: Abschnitt
- 16: Abschnitt
- 17: Übergang
- 18: Übergang
- 19:
- 20: Blechelement
- 21: Blech (konstanter Dicke)
- 22: Blech (konstanter Dicke)
- 23: Blech (flexibel gewalzt)
- 24: Abschnitt
- 25: Abschnitt
- 26: Abschnitt
- 27: Übergang
- 28: Übergang
- 29: Schweißnaht
- 30: Blechelement
- 31: Blech (flexibel gewalzt)
- 32: Blech (flexibel gewalzt)
- 33: Schweißnaht
- 34: Abschnitt
- 35: Abschnitt
- 36: Abschnitt
- 37: Abschnitt
- 38: Übergang
- 39: Übergang
- 40: Blechelement
- 41: Blech (konstanter Dicke)
- 42: Blech (flexibel gewalzt)
- 43: Blech (flexibel gewalzt)
- 44: Abschnitt
- 45: Abschnitt
- 46: Übergang
- 47: Übergang
- 48: Schweißnaht
- 49: Schweißnaht

## Patentansprüche

1. Blechelement (10, 20, 40), insbesondere als Halbzeug, gefügt aus zumindest einem Teil (11, 21, 22, 41) aus flexibel gewalztem Blech mit längs der Walzrichtung A variabler Blechdicke und zumindest einem Teil (12, 23, 42) aus gewalztem Blech mit konstanter Blechdicke, bei welchem an der Fügestelle (33) zumindest teilweise unterschiedliche Blechdicken zusammentreffen.

2. Blechelement (30), insbesondere als Halbzeug, gefügt aus zumindest zwei Teillen (31, 32) aus flexibel gewalztem Blech mit längs der Walzrichtung A₁, A₂ variabler Blechdicke, bei welchem an der Fügestelle (33) zumindest teilsweise unterschiedliche Blechdicken zusammentreffen.

3. Blechelement nach einem der Ansprüche 1 oder 2,
**dadurch gekennzeichnet,**
**daß** die Fügestelle (13, 29, 33) im wesentlichen parallel zu der genannten Walzrichtung A, A₁, A₂ verläuft, längs der sich die Blechdicke des flexibel gewalzten Blechs verändert.

4. Blechelement nach einem der Ansprüche 1 oder 2,
**dadurch gekennzeichnet,**
**daß** die Fügestelle (48, 49) im wesentlichen quer zu der genannten Walzrichtung A, A₁, A₂ verläuft, längs der sich die Blechdicke des flexibel gewalzten Blechs verändert.

5. Blechelement nach einem der Ansprüche 1 bis 4,
**dadurch gekennzeichnet,**
**daß** ein Teil (23) aus flexibel gewalztem Blech mit längs der Walzrichtung A variabler Blechdicke zwischen zwei Teilen (21, 22) aus Blech mit konstanter Blechdicke liegt.

6. Blechelement nach einem der Ansprüche 1 bis 4,
**dadurch gekennzeichnet,**
**daß** ein Teil (21', 41') aus Blech mit konstanter Blechdicke zwischen zwei Teilen (22', 23', 42', 43') aus flexibel gewalztem Blech mit längs der Walzrichtung A, A₁, A₂ variabler Blechdicke liegt.

7. Blechelement nach einem der Ansprüche 1 bis 6,
**dadurch gekennzeichnet,**
**daß** die einzelnen Teile in stumpfem Stoß verschweißt sind.

8. Blechelement nach einem der Ansprüche 1 bis 6,
**dadurch gekennzeichnet,**
**daß** die einzelnen Teile überlappend verschweißt sind.

9. Blechelement nach einem der Ansprüche 1 bis 6,
**dadurch gekennzeichnet,**
**daß** die einzelnen Teile einander überlappend geclincht oder genietet sind.

10. Blechelement nach einem der Ansprüche 1 bis 6,
**dadurch gekennzeichnet,**
**daß** die einzelnen Teile einander überlappend miteinander verklebt sind.

11. Blechelement nach einem der Ansprüche 1 bis 6,
**dadurch gekennzeichnet,**
**daß** die einzelnen Teile jeweils durch eine Quetschnaht verbunden sind.

12. Verfahren zur Herstellung von Blechelementen, insbesondere als Halbzeug,
**dadurch gekennzeichnet,**
**daß** zumindest ein Band aus flexibel gewalztem Blech mit längs der Walzrichtung A variabler Blechdicke und ein Band aus gewalztem Blech mit konstanter Blechdicke parallel zu der genannten Walzrichtung endlos zu einem Band gefügt werden und anschließend Blechelemente aus mindestens einem Teil aus flexibel gewalztem Band und zumindest einem Teil aus Blech mit konstanter Blechdicke abgetrennt werden, wobei die Bänder so gefügt werden, daß an der Fügestelle unterschiedliche Blechdicken aufeinandertreffen.

13. Verfahren zur Herstellung von Blechelementen, insbesondere als Halbzeug,
**dadurch gekennzeichnet,**
**daß** zumindest zwei Bänder aus flexibel gewalztem Blech mit längs der Walzrichtung A₁, A₂ variabler Blechdicke parallel zu der genannten Walzrichtung endlos zu einem Band gefügt werden und anschließend Blechelemente aus zumindest zwei verschiedenen Teilen vom Band abgetrennt werden, wobei die Bänder so gefügt werden, daß an der Fügestelle unterschiedliche Blechdicken aufeinandertreffen.

14. Verfahren zur Herstellung von Blechelementen, insbesondere als Halbzeug,
**dadurch gekennzeichnet,**
**daß** abwechselnd Teile aus flexibel gewalztem Blech mit längs der Walzrichtung A, A₁, A₂ variabler Blechdicke und aus gewalztem Blech mit konstanter Blechdicke jeweils quer zu der genannten Walzrichtung endlos zu einem Band aneinandergefügt werden und anschließend Blechelemente mit jeweils zumindest einem Teil aus flexibel gewalztem Blech und zumindest einem Teil aus Blech mit konstanter Blechdicke abgetrennt werden, wobei die Bänder so gefügt werden, daß an der Fügestelle unterschiedliche Blechdicken aufeinandertreffen.

15. Verfahren nach einem der Ansprüche 12 bis 14,
**dadurch gekennzeichnet,**
**daß** das gefügte Band aufgewickelt und wärmebehandelt wird.

16. Verfahren nach einem der Ansprüche 12 oder 15,
**dadurch gekennzeichnet,**
**daß** das gefügte Band oberflächenbehandelt wird.

17. Verfahren nach einem der Ansprüche 12 bis 16,
**dadurch gekennzeichnet,**
**daß** das gefügte Band vor dem Teilen zum Profil umgeformt wird.

18. Verfahren nach einem der Ansprüche 12 bis 16,
**dadurch gekennzeichnet,**
**daß** die Blechelemente nach dem Teilen des Bandes verformt werden.

## Claims

1. A plate metal element (10, 20, 40), more particularly in the form of a semi-finished product, joined out of at least one part (11, 21, 22, 41) of flexibly rolled plate metal whose plate thickness is variable along the rolling direction A and of at least one part (12, 23, 42) of rolled plate metal with a constant plate thickness, wherein, at the join (33), there meet at least partially different plate thicknesses.

2. A plate metal element (30), more particularly in the form of a semi-finished product, joined out of at least two parts (31, 32) of flexibly rolled plate metal whose plate thickness varies along the rolling direction A₁, A₂, wherein, at the join (33), there meet at least partially different plate thicknesses.

3. A plate metal element according to any one of claims 1 or 2,
**characterised in**
**that** the join (13, 29, 33) extends substantially parallel to said rolling direction A, A₁, A₂ along which the plate thickness of the flexibly rolled plate metal changes.

4. A plate metal element according to any one of claims 1 or 2,
**characterised in**
**that** the join (48, 49) extends substantially transversely to said rolling direction A, A₁, A₂ along which the plate thickness of the flexibly rolled plate metal changes.

5. A plate metal element according to any one of claims 1 to 4,
**characterised in**
**that** a part (23) consisting of flexibly rolled plate metal whose plate thickness varies in the rolling direction A is positioned between two parts (21, 22) consisting of plate metal with a constant plate thickness.

6. A plate element according to any one of claims 1 to 4,
**characterised in**
**that** a part (21', 41') consisting of plate metal with a constant plate thickness is positioned between two parts (22', 23', 42', 43') consisting of a flexibly rolled plate metal whose plate thickness varies in the rolling direction A, A₁, A₂.

7. A plate element according to any one of claims 1 to 6,
**characterised in**
**that** the individual parts are butt-welded.

8. A plate metal element according to any one of claims 1 to 6,
**characterised in**
**that** the individual parts are welded together so as to overlap one another.

9. A plate metal part according to any one of claims 1 to 6,
**characterised in**
**that** the individual parts are clinched or riveted so as to overlap one another.

10. A plate metal element according to any one of claims 1 to 6,
**characterised in**
**that** the individual parts are glued to one another so as to overlap one another.

11. A plate metal element according to claims 1 to 6,
**characterised in**
**that** the individual parts are connected to one another by a squeezed seam.

12. A plate metal element according to any one of claims 1 to 6,
**characterised in**
**that** at least one strip consisting of a flexibly rolled plate metal whose plate thickness varies along the rolling direction A and one strip consisting of a flexibly rolled plate metal with a constant plate thickness are continuously joined parallel to said rolling direction to form a strip and that subsequently, plate metal elements consisting of at least one part of flexibly rolled strip and at least one part with a constant plate thickness are separated, wherein the strips are joined in such a way that different plate thicknesses meet at the join.

13. A method of producing plate metal elements, more particularly in the form of semi-finished products,
**characterised in**
**that** at least two strips consisting of flexibly rolled plate metal whose plate thickness varies along the rolling direction A₁, A₂ are continuously joined parallel to said rolling direction into a strip and that subsequently, plate metal elements consisting of at least two different parts are separated from the strip, wherein the strips are joined in such a way that different plate thicknesses meet at the join.

14. A method of producing plate metal elements, more particularly in the form of semi-finished products,
**characterised in**
**that** parts consisting of flexibly rolled plate metal whose plate thickness varies in the rolling direction A, A₁, A₂ and consisting of rolled plate metal with a constant plate thickness are continuously alternately joined transversely to said rolling direction to form a strip and that subsequently plate metal elements with at least one part of flexibly rolled plate metal and at least one part of plate metal with a constant plate thickness are separated, wherein the strips are joined in such a way that different plate thicknesses meet at the join.

15. A method according to any one of claims 12 to 14,
**characterised in**
**that** the joined strip is wound up and heat-treated.

16. A method according to any one of claims 12 or 15,
**characterised in**
**that** the joined strip is surface-treated.

17. A method according to any one of claims 12 to 16,
**characterised in**
**that**, prior to being divided, the joined strip is formed into a profile.

18. A method according to any one of claims 12 to 16,
**characterised in**
**that**, after the strip has been divided, the plate metal elements are deformed.

## Revendications

1. Elément de tôle (10, 20, 40), notamment en tant que semi-produit, assemblé de manière jointive à partir d'au moins une partie (12, 23, 42) en tôle obtenue par laminage flexible avec une épaisseur de tôle variable le long de la direction de laminage A, et au moins une partie (11, 21, 22, 41) en tôle laminée à épaisseur de tôle constante, dans lequel au niveau de la zone du joint d'assemblage (33) se rencontrent au moins partiellement des épaisseurs de tôle différentes.

2. Elément de tôle (30), notamment sous forme de semi-produit, assemblé de manière jointive à partir d'au moins deux parties (31, 32) en tôle obtenue par laminage flexible avec une épaisseur de tôle variable le long de la direction de laminage A₁, A₂, dans lequel au niveau de la zone du joint d'assemblage (33) se rencontrent au moins partiellement des épaisseurs de tôle différentes.

3. Elément de tôle selon l'une des revendications 1 ou 2, **caractérisé en ce que** la zone du joint d'assemblage (13, 29, 33) s'étend sensiblement de manière parallèle à la direction de laminage A, A₁, A₂ citée, le long de laquelle varie l'épaisseur de tôle de la tôle obtenue par laminage flexible.

4. Elément de tôle selon l'une des revendications 1 ou 2, **caractérisé en ce que** la zone du joint d'assemblage (48, 49) s'étend sensiblement de manière transversale à la direction de laminage A, A₁, A₂ citée, le long de laquelle varie l'épaisseur de tôle de la tôle obtenue par laminage flexible.

5. Elément de tôle selon l'une des revendications 1 à 4, **caractérisé en ce qu'**une partie (23) en tôle obtenue par laminage flexible avec une épaisseur de tôle variable le long de la direction de laminage A, se situe entre deux parties (21, 22) en tôle à épaisseur de tôle constante.

6. Elément de tôle selon l'une des revendications 1 à 4, **caractérisé en ce qu'**une partie (21', 41') en tôle à épaisseur de tôle constante se situe entre deux parties (22', 23', 42', 43') en tôle obtenue par laminage flexible avec une épaisseur de tôle variable le long de la direction de laminage A, A₁, A₂.

7. Elément de tôle selon l'une des revendications 1 à 6, **caractérisé en ce que** les parties individuelles sont soudées selon un joint d'assemblage bout à bout.

8. Elément de tôle selon l'une des revendications 1 à 6, **caractérisé en ce que** les parties individuelles sont soudées en se chevauchant.

9. Elément de tôle selon l'une des revendications 1 à 6, **caractérisé en ce que** les parties individuelles sont assemblées par clinchage ou rivetage en se chevauchant mutuellement.

10. Elément de tôle selon l'une des revendications 1 à 6, **caractérisé en ce que** les parties individuelles sont collées les unes aux autres en se chevauchant mutuellement.

11. Elément de tôle selon l'une des revendications 1 à 6, **caractérisé en ce que** les parties individuelles sont assemblées respectivement par un joint de sertissage.

12. Procédé pour la fabrication d'éléments de tôle, notamment en tant que semi-produit, **caractérisé en ce qu'**au moins une bande en tôle obtenue par laminage flexible avec une épaisseur de tôle variable le long de la direction de laminage A, et au moins une bande en tôle laminée à épaisseur de tôle constante sont assemblées sans fin, parallèlement à la direction de laminage citée, en une bande, et **en ce que** de cette bande sont ensuite séparés ou sectionnés des éléments de tôle en au moins une partie en une bande obtenue par laminage flexible et au moins une partie en tôle à épaisseur de tôle constante, les bandes étant assemblées de façon telle qu'au niveau de la zone du joint d'assemblage se rencontrent des épaisseurs de tôle différentes.

13. Procédé pour la fabrication d'éléments de tôle, notamment en tant que semi-produit, **caractérisé en ce qu'**au moins deux bandes en tôle obtenue par laminage flexible avec une épaisseur de tôle variable le long de la direction de laminage A₁, A₂, sont assemblées sans fin, parallèlement à la direction de laminage citée, en une bande, et **en ce que** de cette bande sont ensuite séparés ou sectionnés des éléments de tôle en au moins deux parties différentes, les bandes étant assemblées de façon telle qu'au niveau de la zone du joint d'assemblage se rencontrent des épaisseurs de tôle différentes.

14. Procédé pour la fabrication d'éléments de tôle, notamment en tant que semi-produit, **caractérisé en ce que** des parties en tôle obtenue par laminage flexible avec une épaisseur de tôle variable le long de la direction de laminage A, A₁, A₂, et en tôle laminée avec une épaisseur de tôle constante, sont assemblées sans fin, de manière alternée, respectivement de manière transversale à la direction de laminage citée, en une bande, **en ce que** de cette bande sont ensuite séparés ou sectionnés des éléments de tôle chacun en au moins une partie en tôle obtenue par laminage flexible et au moins une partie en tôle à épaisseur de tôle constante, les bandes étant assemblées de façon telle qu'au niveau de la zone du joint d'assemblage se rencontrent des épaisseurs de tôle différentes.

15. Procédé selon l'une des revendications 12 à 14, **caractérisé en ce que** la bande assemblée est enroulée et soumise à un traitement thermique.

16. Procédé selon l'une des revendications 12 ou 15, **caractérisé en ce que** la bande assemblée subit un traitement de surface.

17. Procédé selon l'une des revendications 12 à 16, **caractérisé en ce que** la bande assemblée est transformée par formage en un profilé avant la séparation en éléments.

18. Procédé selon l'une des revendications 12 à 16, **caractérisé en ce que** les éléments de tôle sont déformés après la séparation en éléments de la bande.
